# EUROPEAN PATENT APPLICATION

(11) **EP 3 144 526 A1**
(43) Date of publication of application: **22.03.2017**
(21) Application number: 15185437.9
(22) Date of filing: 16.09.2015
(51) Int. Cl.: F03D 1/06

(54) **JOINT FOR A SEGMENTED WIND TURBINE ROTOR BLADE**

(71) Applicant: Siemens Aktiengesellschaft, 80333 München (DE)
(72) Inventor: Dixon, Kristian R., Boulder, 80304 (US); Fuglsang, Peter, 7100 Vejle (DK); Kirkegaard, Jeppe Funk, 7400 Herning (DK); Kristensen, Jens Jørgen Østergaard, 9240 Nibe (DK); Mailly, Luis, Lafayette, 80026 (US); Pawar, Ashish, 9000 Aalborg (DK); Torgard, Sigmund Wenningsted, 7000 Fredericia (DK)

(57) **Abstract**

The invention relates to a rotor blade (20) of a wind turbine. The rotor blade (20) comprises an elongated first segment (30) with a longitudinal axis (31) and an elongated second segment (40) with a longitudinal axis (41). The first segment (30) comprises a first ending (32) and a second ending (33), wherein the first ending (32) and the second ending (33) refer to the ends of the first segment (30) which are furthest apart from each other, and the second segment (40) comprises a first ending (42) and a second ending (43), wherein the first ending (42) and the second ending (43) refer to the ends of the second segment (40) which are furthest apart from each other. Both segments (30, 40) are connected together lengthwise by a joint, and the joint comprises the first ending (32) of the first segment (30) and the first ending (42) of the second segment (40). The joint comprises at least one bolt connection, and the first ending (32) of the first segment (30) comprises a recess. Furthermore, the first ending (42) of the second segment (40) is shaped such that it fits into the recess of the first ending (32) of the first segment (30), such that movement of the first ending (42) of the second segment (40) in any direction perpendicular to the longitudinal axis (41) of the second segment (40) is prevented. The invention is also related to a method of manufacturing a rotor blade (20) of a wind turbine, and to a wind turbine for generating electricity comprising at least one such rotor blade (20).

## Description

The invention relates to a rotor blade of a wind turbine, wherein the rotor blade comprises an elongated first segment and at least an elongated second segment. Furthermore, the invention relates to a method of manufacturing such a rotor blade of a wind turbine. Finally, the invention relates to a wind turbine for generating electricity comprising at least one such rotor blade.

As rotor blades of wind turbines get larger, longer and heavier, transport of the rotor blades gets increasingly problematic. For road transport by e.g. trucks, the limiting factors can be availability of trucks which are sufficiently large. Also clearance at bridges, tunnels and especially at turns, intersections and roundabouts represent an ever-growing challenge. Furthermore, weight restrictions of the roads used for transport play an increasingly larger role. Thus, when developing a wind turbine project, much effort goes into researching the route and making sure that the required equipment is available.

Some regions have legal restrictions with regard to the maximum length of items that are allowed to be transported on trucks. As very large rotor blades may possibly be used in these regions, this implies that a less than optimal wind turbine with a less than optimal rotor blade size has to be used in order to be compliant with these regulations.

The plan-form geometry of a rotor blade of a wind turbine is also affected by requirements for transport and clearance. The shape of any flapwise and/or edgewise extension is restricted by the mentioned legal and practical restrictions.

Finally, the length of the rotor blade also causes a challenge during manufacturing. Manufacturing of very large rotor blade requires that the production facilities are very large as well. Handling long rotor blades at the manufacturing facility is also a challenge, due to the high flexibility of long rotor blades.

As a consequence, much effort has already been taken to develop alternative concepts. One promising concept is the segmentation of the rotor blade, i.e. segmentation into a first segment and at least a second segment. When using a segmented rotor blade, a main challenge is the provision of a joint which is connecting both segments. Such a joint shall be not too heavy in weight, stable, and not too expensive.

One approach of providing such a segmented rotor blade has been disclosed in the European patent application EP 2 357 357 A2. Therein, a first segment of a rotor blade with a first insert and a second segment of the rotor blade with a second insert is shown. These two inserts are connected with each other by a plurality of bolts. At least two bolts are needed in this concept. These at least two bolts are arranged in shear in order to reduce the bending moment which acts on the joint.

Another approach is the attachment of the two segments of a segmented rotor blade by an adhesive. However, a drawback of this approach is the complicated connection procedure and other challenges which are related to providing a reliable and stable connection joint by just applying an adhesive connection.

An important drawback of a bolted joint with at least two bolts loaded in shear is that a high manufacturing precision is required. If, for example, only a temperature difference of ten degrees exists between the pre-manufactured first insert and the pre-manufactured second insert while drilling holes into the inserts, these holes might not fit any longer when both inserts achieve equal temperature.

A solution to this known problem is the provision of carbon fibers instead of glass fibers for use of manufacturing the inserts. Carbon fibre laminates can be designed to have almost zero coefficient of thermal expansion. However, carbon fibers are much more expensive than glass fibers and, thus, a less expensive solution is desired.

A way to mitigate the drawback of using at least two bolts is to match-drill the holes, which means that the two pieces are aligned using some fixture and then the holes are drilled simultaneously through both parts. However, this has obvious logistical drawbacks, e.g. the two parts will only fit to each other. This means that replacing a damaged part requires a new match drilling process, which could be very impractical to do in the field, and also will make the holes larger, which in turn reduces the strength of the structure.

In other words, there is the desire to provide a bolted joint between two segments of a rotor blade which overcomes the drawbacks of conventional connection techniques.

This problem is solved by the object of the independent claims. Advantageous embodiments and modifications are disclosed in the dependent claims.

According to the invention, there is provided a rotor blade of a wind turbine, wherein the rotor blade comprises an elongated first segment with a longitudinal axis and an elongated second segment with a longitudinal axis. The first segment comprises a first ending and a second ending, wherein the first ending and the second ending refer to the ends of the first segment which are furthest apart from each other. Likewise, the second segment comprises a first ending and a second ending, wherein the first ending and the second ending also refer to the ends of the second segment which are furthest apart from each other. Both segments are connected together lengthwise by a joint. The joint comprises the first ending of the first segment and the first ending of the second segment. The joint comprises at least one bolt connection. Furthermore, the first ending of the first segment comprises a recess, and the first ending of the second segment is shaped such that it fits into the recess of the first ending of the first segment. Thus, movement of the first ending of the second segment in any direction perpendicular to the longitudinal axis of the second segment is prevented.

In other words, a key aspect of the present invention is to avoid a bolted joint with two or more bolts while still benefiting of the division of the shear loads into two parts.

This is achieved by providing a recess at the end of one segment and a corresponding, mating component arranged at the other segment. Such a configuration may also be referred to as a stub-and-socket configuration. The technical effect is that the separation of the force couple is still given, however, manufacturing precision is much less demanding compared to a multi-bolt joint. Thus, the joint according to the invention comprises in particular only one bolt for connecting the first segment and the second segment.

Note that both segments, i.e. the first segment and the second segment of the rotor blade each are configured and shaped as elongated objects. Moreover, these elongated objects are aligned and connected with each other in lengthwise, longitudinal direction. Concretely, a configuration where, for example, a trailing edge flap is attached over a certain spanwise extension to a remaining body of a wind turbine rotor blade shall not be comprised by the described segmented blade. The segments are meant to be connected spanwisely.

The recess, which can also be referred to as a socket, can have any shape in principle. It is essential, however, that it is able to prevent and block any movement of the mating part of the second segment once that this part is inserted into the recess. In particular, any movement of the mating part of the second segment in a direction perpendicular to the longitudinal axis of the second segment shall be avoided. Axial movement is in principle still possible.

In an embodiment of the invention, the bolt connection is located at a lengthwise distance of at least one percent, in particular of at least three percent from the first ending of the second segment.

Such a minimum distance is preferred in order to separate the force couple efficiently. In practice, i.e. having a modern wind turbine rotor blade of for instance between 25 meters and 100 meters total length, a distance of one or a few meters between the stub-and-socket connection and the bolted connection is preferable.

In another embodiment of the invention, the first ending of the second segment is tapered towards its end.

The tapering is designed such that the thinner part is at the very end of the second segment while the thicker part is further away from the first ending of the second segment. Such a tapered first ending is advantageous because insertion of the first ending of the second segment into the recess of the first segment is facilitated.

In another embodiment of the invention, the recess of the first ending of the second segment is designed as a blind hole.

An advantage of such a blind hole is that the axial possibility of movement, in other words the axial degree of freedom, is at least partly limited. Thus, when inserting both segments together, there is a natural boundary or limit until which the first ending of the second segment can be inserted into the recess.

In another embodiment of the invention, the first ending of the first segment comprises a pre-manufactured first insert which is rigidly attached to the first segment, and the second ending of the second segment comprises a pre-manufactured second insert which is rigidly attached to the second segment.

An advantage of pre-manufacturing one or both inserts is that they can be optimized during the manufacturing regarding e.g. the choice of materials. This does not mean that the inserts are not laid in the mould and subsequently the rotor blade is manufactured with the inserts arranged in the mould. Moreover the wording "pre-manufactured insert" means that the inserts as such are manufactured in a separate manufacturing process, which has manufacturing and logistical advantages. Note that in principle any suitable material for the first insert and/or the second insert is possible.

In a preferred embodiment of the invention, however, the first insert and/or the second insert is made of a composite material, in particular a fiber reinforced composite material.

This has the advantage that manufacturing processes are well-known. Furthermore, similar materials are used both for the inserts and for the remainder of the rotor blade. Thus, the cost efficiency ratio is good.

In another embodiment of the invention, the first segment comprises a first shell and the second segment comprises a second shell, and the first shell is connected with the second shell by a flexible sealing.

Such a flexible sealing has the advantage that loads are not directly transferred from the first shell to the second shell. This means that loads from the first segment to the second segment are dampened, at least with regard to the respective rotor blade shell parts.

Such a flexible sealing is also referred to as a flexible sealing list.

If the sealing list is flexible enough, it can also serve as an access path to the bolt, given that the list is made wide enough. As there is only one bolt in the invention, another access hole and cover panel is not needed.

Therefore another advantage of the invention is that access holes and cover panels which are necessary in conventional bolted connections in order to allow access to and cover the bolt connection is not necessary in the inventive joint. It has to be ensured that access to the bolt is given via the flexible sealing list..

In another embodiment of the invention, the rotor blade comprises a root for attaching the rotor blade to a hub of a wind turbine, wherein the rotor blade comprises a tip which is referred to as the section of the rotor blade which is furthest apart from the root. The first segment comprises the root and the second segment comprises the tip.

In other words, the first segment with the recess represents and corresponds to the root segment of the rotor blade, and the second segment with the corresponding part for being fitted into the recess represents and corresponds to the tip section of the segmented rotor blade.

In another embodiment of the invention the length of the second segment along its longitudinal axis represents at least one third of the total length of the rotor blade.

This means that although in principle the inventive concept is also possible for example for a relatively small rotor blade tip extension or even just a winglet at the tip of the rotor blade, this inventive concept is particularly advantageous for joining and connecting two considerable segments of a rotor blade having a substantial length together. This is due to the fact that the present joint has the capability of providing a strong joint which is necessary for joining two substantial parts of the rotor blades together.

Furthermore, the invention is related to a method of manufacturing a rotor blade of a wind turbine. The rotor blade comprises an elongated first segment and an elongated second segment and the method comprises the following steps:
- Providing a pre-manufactured first insert and a pre-manufactured second insert;
- disposing both inserts into a mould for moulding the rotor blade and
- rigidly connecting the first insert with the first segment of the rotor blade and the second insert with the second segment of the rotor blade.

In other words, a key concept of the presented method is that advantageously in a first step, i.e. a separate manufacturing process, both inserts are provided. Subsequently, these inserts are placed into the mould. Then the inserts are rigidly connected to the rotor blade. This can be done either simultaneously with the manufacturing of the rotor blade or the rotor blade as such can first be manufactured separately, subsequently the inserts are given into the inner cavity of the rotor blade and finally all parts are connected together.

Finally, the invention also relates to a wind turbine for generating electricity comprising at least one rotor blade as described in one of the embodiments above.

Embodiments of the invention are now described, by way of example only, by the accompanying drawings, of which:
- Figure 1: shows a segmented rotor blade;
- Figure 2: shows an enlargement of the connection of the two rotor blade segments; and
- Figure 3: shows a cross-section perpendicular to the longitudinal axis of the bolted connection.

The illustration in the drawings is in schematic form. It is noted that in different figures, similar or identical elements may be provided with the same reference signs.

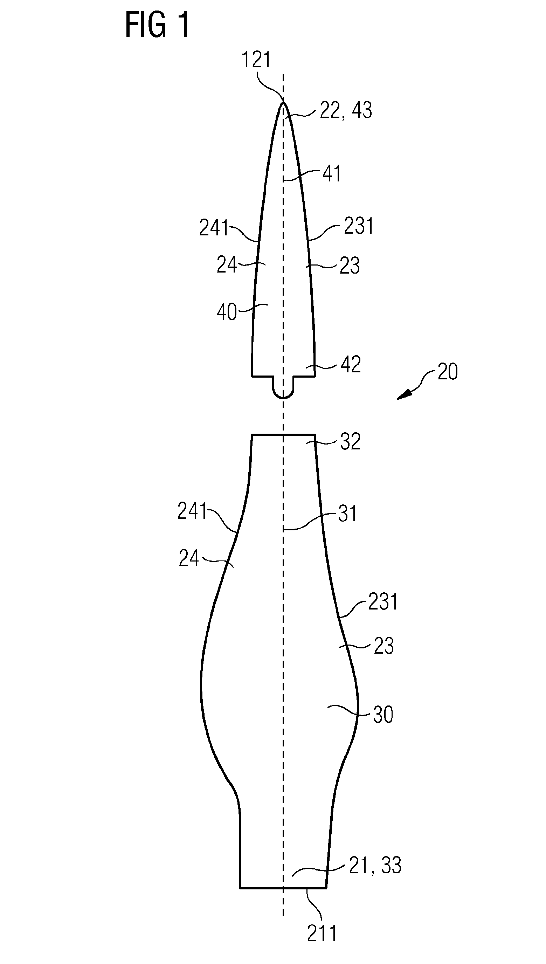

Figure 1 shows a segmented rotor blade 20 of a wind turbine, wherein a first segment 30 is drawn separately from a second segment 40 of the rotor blade 20. The first segment 30 comprises a root section 21 with a root 211. Furthermore it comprises a trailing edge section 23 with a trailing edge 231 and, opposite to the trailing edge section 23, a leading edge section 24 with a leading edge 241.

The first segment 30 is an elongated object. This means that its longitudinal extension and dimensions are significantly larger than its transversal extension and dimensions. In particular, the first segment 30 comprises a virtual first longitudinal axis 31. This first longitudinal axis 31 is also referred to as the longitudinal axis 31 of the first segment 30.

The first segment 30 comprises a first ending 32 and a second ending 33. Both endings 32, 33 are located at opposite ends of the first segment 30. In particular, they refer to the ends which are furthest apart from each other. By comparison, the leading edge 241 and the trailing edge 231 also can be referred to as opposite ends. However, these ends are not as far apart from each other than the first ending 32 and the second ending 33.

The second segment 40 of the rotor blade 20 comprises a tip section 22 with a tip 221. It also comprises a trailing edge section 23 with a trailing edge 231 and a leading edge section 24 with a leading edge 241. The second segment 40 is also shaped as an elongated object. It also has a longitudinal axis which is referred to as the second longitudinal axis 41 or just the longitudinal axis 41 of the second segment 40. The second segment 40 also comprises a first ending 42 and a second ending 43. The second ending 43 corresponds to the tip section 22 of the second segment 40. The first ending 42 of the second segment 40 comprises a specific part which may be referred to as a stub, which is arranged and prepared such that it can be inserted into the recess of the first segment 30.

Thus, in the example of the embodiment of Figure 1, the first segment 30 can also be referred to as the root segment of the rotor blade 20 and the second segment 40 can also be referred to as the tip segment of the rotor blade 20.

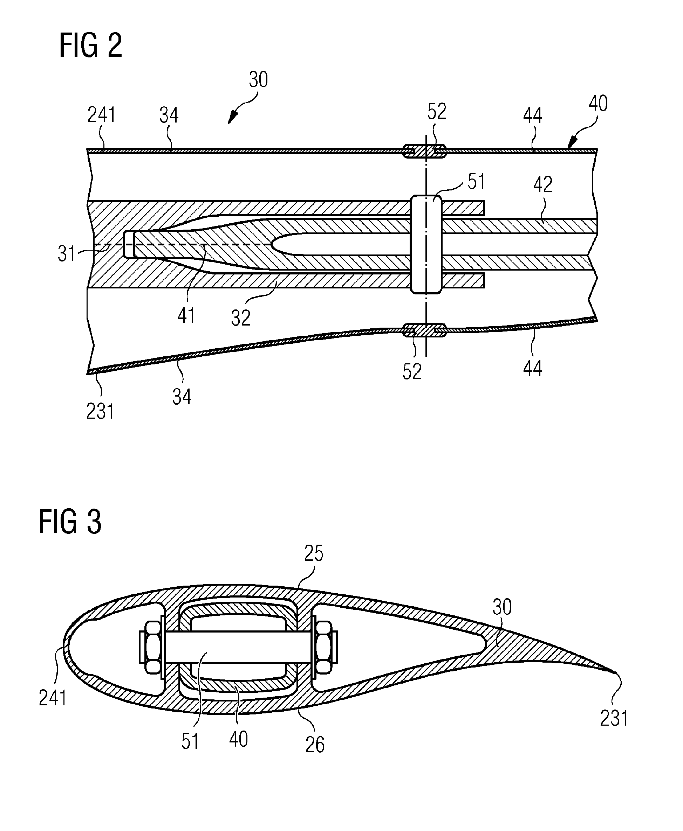

Figure 2 shows a cross sectional view of the joint between the first segment 30 and the second segment 40. In the illustration of Figure 2, both segments are connected with each other. They are connected by a bolt 51. Also the longitudinal axis 31 of the first segment 30 and the longitudinal axis 41 of the second segment 40 can be seen. Furthermore, the first ending 32 of the first segment 30 and the first ending 42 of the second segment 40 is illustrated. It can be seen that the first ending 42 of the second segment 40 fits well into the recess that is provided by the first ending 32 of the first segment 30. Regarding the shells, in particular the first shell 34 adhering to the first segment 30 and the second shell 44 adhering to the second segment 40, these shells 34, 44, are joined together by a flexible sealing 52. Such a flexible sealing 52 has the advantage that loads are not fully and not directly transferred from the first shell 34 to the second shell 44.

Figure 3 shows a cross sectional view perpendicular to the longitudinal axis of the rotor blade. Again, the bolt 51 which tightly connects and joins the first segment 30 with the second segment 40 can be seen. It can also be discerned that the contact area between the first segment 30 and the second segment 40 is large. If the tip and root pieces are manufactured from fibre-reinforced plastic, it is normally desired to avoid them touching directly. As these materials are not wear resistant, it might be advantageous to design the joint so that the touching areas are covered by a shield of teflon covered steel or similar low-friction high-wear resistant material.

## Claims

1. Rotor blade (20) of a wind turbine,
wherein
- the rotor blade (20) comprises an elongated first segment (30) with a longitudinal axis (31) and an elongated second segment (40) with a longitudinal axis (41),
- the first segment (30) comprises a first ending (32) and a second ending (33), wherein the first ending (32) and the second ending (33) refer to the ends of the first segment (30) which are furthest apart from each other,
- the second segment (40) comprises a first ending (42) and a second ending (43), wherein the first ending (42) and the second ending (43) refer to the ends of the second segment (40) which are furthest apart from each other,
- both segments (30, 40) are connected together lengthwise by a joint,
- the joint comprises the first ending (32) of the first segment (30) and the first ending (42) of the second segment (40),
- the joint comprises at least one bolt connection,
**characterized in that**
- the first ending (32) of the first segment (30) comprises a recess, and
- the first ending (42) of the second segment (40) is shaped such that it fits into the recess of the first ending (32) of the first segment (30), such that movement of the first ending (42) of the second segment (40) in any direction perpendicular to the longitudinal axis (41) of the second segment (40) is prevented.

2. Rotor blade (20) according to claim 1,
wherein the bolt connection is located at a lengthwise distance of at least one per cent, in particular of at least three per cent, from the first ending (42) of the second segment (40).

3. Rotor blade (20) according to one of the preceding claims,
wherein the first ending (42) of the second segment (40) is tapered towards its end.

4. Rotor blade (20) according to one of the preceding claims,
wherein the recess of the first ending (42) of the second segment (40) is designed as a blind hole.

5. Rotor blade (20) according to one of the preceding claims,
wherein
- the first ending (32) of the first segment (30) is a pre-manufactured first insert which is rigidly attached to the first segment (30), and
- the first ending (42) of the second segment (40) is a pre-manufactured second insert which is rigidly attached to the second segment (40).

6. Rotor blade (20) according to claim 5,
wherein the first insert and/or the second insert is made of a composite material, in particular a fiber-reinforced composite material.

7. Rotor blade (20) according to one of the preceding claims,
wherein
- the first segment (30) comprises a first shell (34) and the second segment (40) comprises a second shell (44),
- the first shell (34) is connected with the second shell (44) by a flexible sealing (52).

8. Rotor blade (20) according to one of the preceding claims,
wherein
- the rotor blade (20) comprises a root (211) for attaching the rotor blade (20) to a hub of a wind turbine,
- the rotor blade (20) comprises a tip (221) which is referred to as the section of the rotor blade (20) which is furthest apart from the root (211),
- the first segment (30) comprises the root (211), and
- the second segment (40) comprises the tip (221).

9. Rotor blade (20) according to one of the preceding claims,
wherein the length of the second segment (40) along its longitudinal axis (41) represents at least one third of the total length of the rotor blade (20).

10. Method of manufacturing a rotor blade (20) of a wind turbine, wherein the rotor blade (20) comprises an elongated first segment (30) and an elongated second segment (40), and
wherein the method comprises the following steps:
- providing a pre-manufactured first insert and a pre-manufactured second insert,
- disposing both inserts into a mould for molding the rotor blade (20), and
- rigidly connecting the first insert with the first segment (30) of the rotor blade (20) and the second insert with the second segment (40) of the rotor blade (20).

11. Wind turbine for generating electricity comprising at least one rotor blade (20) according to one of the claims 1 to 9.
